Europäisches Patentamt

European Patent Office

Office européen des brevets

(11) Veröffentlichungsnummer: **0 455 077 A2**

## (12) EUROPÄISCHE PATENTANMELDUNG

(21) Anmeldenummer: **91106379.0**

(22) Anmeldetag: **20.04.91**

(51) Int. Cl.⁵: **B01D 37/03**

(30) Priorität: **04.05.90 DE 4014309**

(43) Veröffentlichungstag der Anmeldung:
**06.11.91 Patentblatt 91/45**

(84) Benannte Vertragsstaaten:
**AT BE CH DE ES FR GB IT LI NL SE**

(71) Anmelder: **BAYER AG**

**W-5090 Leverkusen 1 Bayerwerk(DE)**

(72) Erfinder: **von Bonin, Wulf, Dr.
Droste-Hülshoff-Strasse 9
W-5068 Odenthal(DE)**
Erfinder: **Henkel, Hanno, Dr.
Bodelschwinghstrasse 21
W-4150 Krefeld(DE)**

(54) **Kombinierte Flockmittel.**

(57) Besonders vorteilhafte Flockmittel um Schlämme oder Trüben zu sohnellem Sedimentieren zu bringen bestehen aus einer Kombination aus wenigstens einem hochmolekularen Polymeren und wenigstens einer niedermolekularen polyionischen Verbindung.

EP 0 455 077 A2

EP 0 455 077 A2

Die vorliegende Erfindung betrifft kombinierte Flockmittel, die insbesondere das Absetzverhalten von Klärschlämmen vorteilhaft beeinflussen.

Hilfsmittel, die gestatten nicht oder langsam sedimentierende Schlämme und Trüben zu relativ schnellem Sedimentieren zu bringen, d.h. auszuflocken, bezeichnet man im allgemeinen als Flockungsmittel. Primäre Flockungsmittel, z.B. gelöste Eisen- oder Aluminiumverbindungen, bilden durch pH-Verschiebung flockige Hydroxide, die die Trüben beim Ausfallen mitreißen und/oder adsorbieren. Sekundäre Flockungsmittel, z.B. hochmolekulare wasserlösliche Polymere, regen durch kolloidchemische Prozesse schon in sehr geringen Mengen die Trüben zur Bildung schneller sedimentierender Flocken an. Vielfach geht mit der Flockungsverbesserung auch eine Verbesserung der Entwässerungsfähigkeit der Schlämme einher. Im folgenden werden solche sekundären Flockungshilfsmittel kurz als Flockmittel bezeichnet.

Flockmittel gewinnen seit einiger Zeit erhebliches Interesse bei der Verbesserung von Sedimentationsgeschwindigkeit und Entwässerbarkeit von Schlämmen, z.B. aus Kläranlagen. Die Flockmittel sind dort schon in minimalen Einsatzmengen wirksam und haben darüber hinaus den Vorteil, keine zusätzlichen anorganischen Ballaststoffe (z.B. gefällte Hydroxide) in die Schlämme einzubringen.

Das jeweils optimale Flockmittel und dessen optimale Einsatzmenge muß fallweise durch Reihenversuche ermittelt werden, denn Schlämme aus verschiedenen Anlagen sind sehr unterschiedlich zusammengesetzt und weisen deshalb ein sehr unterschiedliches Flockungsverhalten auf. Selbst die Zusammensetzung von Schlämmen aus einer Anlage ändert sich über die Zeit hinweg oftmals so sehr, daß die Optimierung des Flockmittels häufig neu vorgenommen werden muß.

Flockmittel können basischen, sauren, amphoteren oder nichtionischen Charakter haben. Um eine gute Flockung zu erzielen sind hohe Molekulargewichte erforderlich, weshalb bekannte Flockmittel Molekulargewichte von beispielsweise über 5000 und vielfach bis zu mehreren Millionen aufweisen. Zur Erzielung spezieller Effekte können auch mehrere Flockmitteltypen kombiniert werden.

Neben hochmolekularen Polyethern, Kohlehydraten, Xanthanen und Proteinen haben sich in der Praxis insbesondere Flockmittel auf der Basis von Polyethylenimin und Polyacrylamid durchgesetzt, letztere auch in einer durch Copolymerisation sauer oder basisch modifizierten Form (siehe z.B. Seifen, Öle, Fette, Wachse, Band 114, Nr. 11/12, S. 447 ff. (1988)).

Im allgemeinen kann die Sedimentation der Trübe in einem gegebenen Klärschlamm durch ein neutrales, basisches oder saures Flockmittel beschleunigt werden. Wenn sich ein Schlamm z.B. als auf basische Flockmittel reagierender Typ erweist ist noch zu ermitteln, wieviel basische Komponenten das hochmolekulare Polymer oder Copolymer enthalten muß, um gute Flockungsergebnisse zu gewährleisten. Im Falle des Polyethylenimins läßt sich der Basengehalt grundsätzlich nicht variieren, so daß hier gegebenenfalls auf Kombinationen mit nichtionischen Flockmitteln ausgewichen werden muß.

Beim Ansprechen des Schlamms auf saure Flockmittel sind gegebenenfalls modifizierte Polyacrylamide, Polyacrylsäure und deren Copolymerisate durchzuprobieren, um die optimale Flockmitteltype aufzufinden.

Derartig vielfältig variierte Polymerisate zur Verfügung zu halten ist aufwendig und teuer, insbesondere deswegen, weil die Herstellung hochmolekularer Copolymerisate des Acrylamids ein sehr sorgfältiges und umständliches Arbeiten erfordert und letztlich nur wenige Typen der Copolymerisate zur Anwendung kommen können Lediglich die Herstellung von Acrylamidhomopolymerisaten mit hohen Molekulargewichten ist relativ einfach, z.B. durch Arbeiten unter Luftausschluß und mit minimalen Aktivatormengen.

Es wurden nun Flockmittel gefunden, die dadurch gekennzeichnet sind, daß es sich um eine Kombination aus wenigstens einem hochmolekularen Polymeren und wenigstens einer niedermolekularen polyionischen Verbindung handelt.

Bei den hochmolekularen Polymeren kann es sich um als solche bekannte Flockmittel handeln, die Molekulargewichte im Bereich von beispielsweise 5000 bis 10 000 000, vorzugsweise 100 000 bis 8 000 000 aufweisen. Sie können ionischen oder nichtionischen Charakter haben und als Copolymere oder Homopolymere vorliegen. Vorzugsweise sind die Polymeren im wesentlichen nichtionisch und Homopolymere. Die Polymeren sind vorzugsweise wasserlöslich, es können aber auch nur kolloidal mit Wasser mischbare Polymere eingesetzt werden. Als Beispiele seien angeführt: Polyethylenoxide, Copolymere und Pfropfpolymere aus Ethylenoxid und anderen Epoxiden, insbesondere Propylenoxid, Polymere auf der Basis von Cellulose, Stärke oder Chitin, Pflanzengumme, mikrobiologisch erhaltene Polymere, Proteine, Polyvinylpyrrolidone, Polyvinylether, Polyacrylate, Polyvinylamide, Polyurethane, Polyamide und Polyacrylamide. Die Polymeren sind vorzugsweise im wesentlichen linear aufgebaut, sie können aber auch verzweigt oder schwach vernetzt sein.

Besonders bevorzugt ist hochmolekulares Polyacrylamid.

Polyacrylamid kann beispielsweise durch partielle oder vollständige Verseifung von Polyacrylnitril oder durch Polymerisation von Acrylamid hergestellt werden.

2

EP 0 455 077 A2

Die Polymerisation von Acrylamid ist bekannt und kann z.B. in Lösungmitteln, vorzugsweise in wäßriger Lösung, durchgeführt werden. Man kann auch in Wasser-in-Öl-Emulsionen polymerisieren oder eine Feststoffpolymerisation anwenden.

Das hochmolekulare Polyacrylamid ist weiterhin vorzugsweise von solcher Art, daß eine 1 gew.-%ige wäßrige Lösung davon eine Viskosität im Bereich von 0,02 bis 0,9 Pa.s bei 23 °C und einer Schergeschwindigkeit von 1 cm/s aufweist. Besonders bevorzugt beträgt diese Viskosität 0,2 bis 0,8 Pa.s.

Die hochmolekularen Polymeren werden im allgemeinen in Form wäßriger Lösungen, gegebenenfalls auch als wäßrige kolloidale Lösungen eingesetzt. Der Feststoffgehalt solcher Lösungen kann z.B. 0,1 bis 10 Gew.-% betragen. Vorzugsweise liegt er bei 0,5 bis 5 Gew.-%.

Bei den niedermolekularen polyionischen Verbindungen kann es sich z.B. um Polyamine und/oder Polysulfonsäuren handeln. Polyamine können beispielsweise primäre, sekundäre, tertiäre und/oder quarternierte Aminogruppen enthalten, linear, verzweigt oder cyclisch aufgebaut sein und Molekulargewichte von weniger als 1000 aufweisen. Bevorzugt sind im wesentlichen linear aufgebaute Polyamine mit Molekulargewichten im Bereich 60 bis 500. Besonders bevorzugt sind Polyalkylenpolyamine mit 2 bis 20 C-Atomen, z.B. Polyethylenpolyamine und Polypropylenpolyamine. Als Einzelbeispiele seien genannt Ethylendiamin, Diethylentriamin, Triethylentetramin, Tetraethylenpentamin und Hexaethylenheptamin. Besonders bevorzugt sind auch Rückstände, die man erhält, wenn man bei der Herstellung von Polyethylenpolyaminen aus Ammoniak und Dichlorethan aus dem Reaktionsgemisch Diethylentriamin abdestilliert hat. Solche Rückstände bestehen im wesentlichen aus einem Gemisch verschiedener Polyamine und haben ein Durchschnittsmolekulargewicht von weniger als 1000.

Bei den Polysulfonsäuren handelt es sich vorzugsweise um aromatische Polysulfonsäuren mit Molekulargewichten unter 2000, vorzugsweise mit Molekulargewichten im Bereich 230 bis 1500, beispielsweise um Di- und/oder Polysulfierungsprodukte von Phenolen, Napthalinen, Polyphenylenen, benzylierten Aromaten und niedrigen Oligophenylethern und deren Formaldehydkondensationsprodukte, insbesondere um Di- und/oder Polysulfierungsprodukte von Phenol, Naphthalin, Toluol, Diphenyl, Terphenyl, Ditolylether, Lignin und die Kondensationsprodukte von Naphthalinsulfonsäure und Bis-(4-hydroxyphenyl)-sulfon oder Ditolylethersulfonsäure und Hydroxyphenylsulfonen mit Formaldehyd.

Die niedermolekularen polyionischen Verbindungen können in freier Form oder in Form von Salzen eingesetzt werden. Soweit Salze eingesetzt werden handelt es sich vorzugsweise um wasserlösliche Salze, beispielsweise um Alkali- oder Ammoniumsalze von Polysulfonsäuren oder um mit Quaternierungsmitteln, Salzsäure, Schwefelsäure, organischen Säuren, Sulfonsäuren, Phosphorsäure oder Kohlensäure umgesetzte Polyamine.

Im Rahmen der vorliegenden Erfindung können hochmolekulare Polymere und niedermolekulare polyionische Verbindungen beispielsweise in Gewichtsverhältnissen von 50 bis 0,1 zu 1 eingesetzt werden. Vorzugsweise liegt dieses Gewichtsverhältnis im Bereich 20 bis 0,5 zu 1.

Sowohl die hochmolekularen Polymere als auch die niedermolekularen polyionischen Verbindungen können jeweils als Stoffgemische vorliegen.

Erfindungsgemäße Flockmittel und/oder ihre Bestandteile können z.B. als Pulver oder Pulvermischungen abgemischt, transportiert und gelagert werden. Dabei können das Pulver und die Pulvermischungen unter Mitverwendung von Rieselhilfsmitteln und/oder inerten Füllstoffen hergestellt werden, beispielsweise unter Mitverwendung von Kieselsäure, Kreide, Aschen, Gesteinsmehlen, Sanden und/oder Tonen. Auch Kombinationen erfindungsgemäßer Flockmittel mit anderen Hilfsmitteln zur Flockung und/oder Entwässerung sind möglich, beispielsweise mit Polycarbonsäuren, Polyacrylsäure, Polymethacrylsäure, Copolymerisaten von Malein-, Fumar- und Itaconsäure und deren partiellen Amiden und partiellen Estern, Eisensalzen, Aluminiumsalzen, gebranntem oder gelöschtem Kalk, Flugaschen, Hochofenaschen und/oder Zementen.

Die erfindungsgemäßen Flockmittel werden im allgemeinen den zu klärenden und/oder zu entwässernden Schlämmen oder Trüben unmittelbar vor dem Klär- oder Entwässerungsprozeß zugemischt. Da einerseits eine gute Vermischung der Flockmittel mit den Schlämmen oder Trüben und andererseits ein die Schlammflocken möglichst schonender Mischprozeß anzustreben sind, ist es vorteilhaft erfindungsgemäße Flockmittel oder ihre Bestandteile gelöst oder feindispergiert in Wasser zuzusetzen. Dabei sind Wirkstoffkonzentrationen von unter 10 Gew.-% besonders vorteilhaft und häufig solche von unter 1 Gew.-% oder sogar unter 0,5 Gew.-% anwendbar.

Bezogen auf die Summe der Gewichte des zu klärenden Materials und des Flockmittels bzw. der Flockmittelzubereitung können erfindungsgemäße Flockmittel beispielsweise in Mengen von 0,0001 bis 0,1 % eingesetzt werden. Vorzugsweise beträgt diese Menge 0,001 bis 0,01 %.

Die Zugabe erfindungsgemäßer Flockmittel erfolgt vorzugsweise so, daß man zunächst die gewünschte Mischung aus hochmolekularem Polymer und niedermolekularer polyionischer Verbindung oder aus Zubereitungen davon herstellt und diese Mischung dem zu klärenden Material zusetzt. Man kann auch das hochmolekulare Polymer und die niedermolekulare polyionische Verbindung oder Zubereitungen davon jeweils getrennt, gleichzeitig oder nacheinander in beliebiger Reihenfolge dem zu klärenden Material zufügen.

Die vorliegende Erfindung betrifft auch ein Verfahren zum Ausflocken von festen Bestandteilen aus Schlämmen, insbesondere Klärschlämmen und Trüben mit Flockmitteln, das dadurch gekennzeichnet ist, daß man das zu klärende Material mit 0,0001 bis 0,1 Gew.-% (bezogen auf die Summe aus zu klärendem Material und Flockmittel) mit einer Kombination aus wenigstens einem hochmolekularen Polymer und wenigstens einer niedermolekularen polyionischen Verbindung, die im Gewichtsverhältnis 50 bis 0,1 zu 1 angewendet werden, als Flockmittel versetzt.

Mit der vorliegenden Erfindung werden vorteilhafte überraschende Effekte realisiert. So wird zunächst die Sedimentationsgeschwindigkeit erhöht, d.h. eine gewünschte oder erzielbare Ausfällungsrate wird in kürzerer Zeit erreicht als bei Flockmitteln des Standes der Technik. Dann ist es nicht mehr erforderlich zur optimalen Abstimmung des Flockmittels auf den jeweiligen Schlamm eine größere Zahl von hochmolekularen, modifizierten Polymeren zur Verfügung zu halten, sondern es reicht ein hochmolekulares Polymer aus, wobei die Optimierung auf den jeweiligen Schlamm durch Reihenversuche mit variablen Zusätzen leicht zugänglicher niedermolekularer polyionischer Verbindungen erfolgen kann.

Dies ist insbesondere deshalb überraschend, weil die grundsätzlich bekannte Wirksamkeit von hochmolekularen Polymeren, z.B. Polyacrylamiden als Flockmittel, durch Zusätze von alleine nicht als Flockmittel bekannten oder wirksamen niedermolekularen polyionischen Verbindungen in synergistischer Weise gesteigert wird.

In den folgenden Beispielen beziehen sich angegebene Teile und Prozente auf das Gewicht, soweit nichts anderes gesagt ist.

Beispiele

a) Folgende Einsatzmaterialien wurden verwendet:

hochmolekulares Polymeres:

In wäßriger Lösung (950 ml) wurde durch Polymerisation von 50 Gew.-Teilen Acrylamid unter Zusatz von 0,02 Gew.-Teilen Ammoniumpersulfat als Initiator bei 45° C und einer Reaktionszeit von 24 Stunden Polyacrylamid hergestellt. Nach der Reaktionszeit waren nahezu 100 % des Acrylamids umgesetzt und die erhaltene wäßrige Lösung von Polyacrylamid wies bei 23° C und einer Schergeschwindigkeit von 1 cm/s eine Viskosität von 0,64 Pa.s auf.

Im folgenden wird dieses hochmolekulare Polymere als PAA bezeichnet.

niedermolekulare polyionische Verbindungen:

|  | Bezeichnung |
|---|---|
| Ethylendiamin | A1 |
| Diethylentriamin | A2 |
| Sumpfprodukt aus der Herstellung und Destillation von A2, Durchschnitts- molekulargewicht unter 1000 | A3 |
| Polyethylenimin, oligomer | A4 |
| Na-Salz eines Naphthalindisulfonsäure- Bis-(4-hydroxyphenyl)-sulfon-Form- aldehyd-Kondensates, Molverhältnis der Komponenten 1:0,8:0,9, Molekulargewicht unter 1500 mit mindestens einer Sulfogruppe pro aromatischen Kern | S1 |
| Sulfonierungsprodukt eines Gemisches aus gleichen Gewichtsteilen Diphenyl und Terphenyl mit mindestens einer Sul- fogruppe pro aromatischen Kern | S2 |
| Gemisch gleicher Teile S1 + S2 | S3 |

Klärschlämme:

Es kamen Schlämme aus drei verschiedenen Industriekläranlagen und ein Schlamm aus einer kommunalen Kläranlage zum Einsatz.

| Schlamm aus | Bezeichnung |
|---|---|
| Industriekläranlage I | K1 |
| Industriekläranlage II | K2 |
| Industriekläranlage III, Neutralisationsstufe | K3 |
| Industriekläranlage III, Endablauf-Mischschlamm | K4 |
| kommunale Großkläranlage | K5 |

b) Allgemeine Arbeitsweise:

Die in den Einzelbeispielen angegebenen Zusätze zu Schlämmen wurden jeweils als 1 %ige wäßrige Lösung vorgemischt und davon bei 17 bis 22°C jeweils 0,2 ml zu jeweils 100 ml Schlamm zugefügt. Das so erhaltene Gemisch wurde 3 Minuten mit einem Stabrührer gerührt und dann in einen 100 ml Meßzylinder überführt. Dort wurde nach der jeweils angegebenen Zeit die Höhe des Schlamm-Meniskus in ml abgelesen. Einzelheiten sind aus der Tabelle 1 ersichtlich.

Erfindungsgemäß sind die Beispiele 1.3, 1.4, 1.5, 1.7, 1.8, 2.2, 3.3, 3.4, 3.6, 3.8, 4,3 und 5.1. Die anderen Beispiele sind Vergleichsbeispiele, bei denen nichts zugesetzt wurde oder nur eine Komponente der erfindungsgemäßen Kombination aus mindestens 2 Komponenten. Die Beispiele zeigen, daß sich bei Anwendung der erfindungsgemäßen Zusätze die Absetzzeit der Schlämme wesentlich verkürzt.

Tabelle 1

| Bsp. Nr. | Schlamm | Zusatz | Absetzhöhe in ml nach | | | | | | |
|---|---|---|---|---|---|---|---|---|---|
| | | | 0,5 | 1 | 1,5 | 2 | 2,5 | 3 | 24 Stunden |
| 1.0 | K1 | - | 90 | 85 | 78 | 70 | 60 | 55 | 40 |
| 1.1 | K1 | PAA | 91 | 88 | 80 | 75 | 69 | 62 | 43 |
| 1.2 | K1 | S3 | 98 | 95 | 91 | 89 | 85 | 81 | 43 |
| 1.3 | K1 | PAA + S3 (9:1) | 90 | 79 | 69 | 60 | 53 | 50 | 38 |
| 1.4 | K1 | PAA + S3 (3:1) | 73 | 56 | 49 | 46 | 44 | 42 | 37 |
| 1.5 | K1 | PAA + S3 (1:1) | 90 | 75 | 61 | 52 | 49 | 43 | 38 |
| 1.6 | K1 | A3 | 91 | 88 | 83 | 77 | 67 | 59 | 40 |
| 1.7 | K1 | PAA + A3 (3:1) | 80 | 53 | 48 | 41 | 39 | 38 | 37 |
| 1.8 | K1 | PAA + A3 (1:1) | 91 | 82 | 72 | 62 | 54 | 49 | 38 |
| 2.0 | K2 | - | 69 | 40 | 30 | 24 | 22 | 20 | 19 |
| 2.1 | K2 | PAA | 81 | 37 | 29 | 23 | 21 | 20 | 19 |
| 2.2 | K2 | PAA + S3 (3:1) | 60 | 31 | 25 | 21 | 20 | 20 | 19 |
| 2.3 | K2 | S3 | 91 | 68 | 49 | 37 | 29 | 25 | 20 |
| 3.0 | K3 | - | 99 | 99 | 58 | 98 | 97 | 97 | 52 |
| 3.1 | K3 | PAA | 38 | 34 | 32 | 32 | 32 | 32 | 30 |
| 3.2 | K3 | A1 | 99 | 99 | 98 | 97 | 96 | 83 | 40 |
| 3.3 | K3 | PAA + A1 (19:1) | 31 | 30 | 30 | 30 | 30 | 30 | 29 |
| 3.4 | K3 | PAA + A1 (9:1) | 32 | 32 | 32 | 32 | 32 | 32 | 29 |
| 3.5 | K3 | A3 | 99 | 98 | 98 | 97 | 97 | 91 | 50 |
| 3.6 | K3 | PAA + A3 (9:1) | 33 | 32 | 32 | 32 | 32 | 32 | 32 |
| 3.7 | K3 | PAA + A4 + A2 (9:2:1) | 22 | 22 | 21 | 21 | 21 | 21 | 21 |
| 4.0 | K4 | - | 98 | 90 | 80 | 72 | 67 | 60 | 21 |
| 4.1 | K4 | PAA | 27 | 27 | 27 | 27 | 27 | 27 | 27 |
| 4.2 | K4 | A3 | 99 | 97 | 74 | 57 | 50 | 49 | 21 |
| 4.3 | K4 | PAA + A3 (3:1) | 21 | 21 | 21 | 21 | 21 | 21 | 21 |
| 5.0 | K5 | - | 89 | 84 | 76 | 70 | 59 | 53 | 40 |
| 5.1 | K5 | PAA + S1 (4:1) | 74 | 57 | 48 | 44 | 44 | 42 | 38 |

## Patentansprüche

1. Flockmittel, dadurch gekennzeichnet, daß es sich um eine Kombination aus wenigstens einem hochmolekularen Polymer und wenigstens einer niedermolekularen polyionischen Verbindung handelt.

7

**2.** Flockmittel nach Anspruch 1, dadurch gekennzeichnet, daß wenigstens ein hochmolekulares Polyacrylamid zugegen ist.

**3.** Flockmittel nach Anspruch 2, dadurch gekennzeichnet, daß das Polyacrylamid in 1 gew.-%iger wäßriger Lösung eine Viskosität im Bereich von 0,02 bis 0,9 Pa.s bei 23°C und einer Schergeschwindigkeit von 1 cm/s aufweist.

**4.** Flockmittel nach Anspruch 1, dadurch gekennzeichnet, daß wenigstens eine niedermolekulare Verbindung aus der Gruppe der Polyamine mit Molekulargewichten unter 1000 und/oder der Polysulfonsäuren mit Molekulargewichten unter 2000 zugegen ist.

**5.** Flockmittel nach Anspruch 1, dadurch gekennzeichnet, daß die niedermolekulare polyionische Verbindung in Salzform vorliegt.

**6.** Flockmittel nach Anspruch 1, dadurch gekennzeichnet, daß es sich bei dem hochmolekularen Polymer und/oder der niedermolekularen polyionischen Verbindung um Stoffgemische handelt.

**7.** Flockmittel nach Anspruch 1, dadurch gekennzeichnet, daß das Gewichtsverhältnis von hochmolekularem Polymer zu niedermolekularer polyionischer Verbindung 50 bis 0,1:1 beträgt.

**8.** Verfahren zum Ausflocken von festen Bestandteilen aus Schlämmen und Trüben mit Flockmitteln, dadurch gekennzeichnet, daß man das zu klärende Material mit 0,0001 bis 0,1 Gew.-% (bezogen auf die Summe aus zu klärendem Material und Flockmittel) mit einer Kombination aus wenigstens einem hochmolekularen Polymer und wenigstens einer niedermolekularen polyionischen Verbindung, die im Gewichtsverhältnis 50 bis 0,1:1 angewendet werden, als Flockmittel versetzt.

**9.** Verfahren nach Anspruch 8, dadurch gekennzeichnet, daß man das Flockmittel gelöst oder fein dispergiert in Wasser mit einer Wirkstoffkonzentration von unter 10 Gew.-% einsetzt.